# EUROPEAN PATENT APPLICATION

(11) **EP 4 775 490 A1**
(43) Date of publication of application: **15.07.2026**
(21) Application number: 25150844.6
(22) Date of filing: 09.01.2025
(51) Int. Cl.: B64C 27/22, B64C 27/26, B64C 39/06, B64C 27/82

(54) **COMPOUND HELICOPTER WITH LATERAL BOOMS**

(71) Applicant: AIRBUS HELICOPTERS DEUTSCHLAND GmbH, 86609 Donauwörth (DE)
(72) Inventor: FINK, Axel, 86609 DONAUWÖRTH (DE); BLACHA, Martin, 86609 DONAUWÖRTH (DE)
(74) Representative: GPI Brevets

(57) **Abstract**

The invention relates to a compound helicopter (1) comprising a fuselage (4), a main rotor (2), a fixed wing arrangement (5) with an upper wing (6) and a lower wing (7) joining at an interconnection region (11), a propeller (8a) mounted to the interconnection region (11), and a lateral boom (14a) connected to the lower wing (7). The main rotor (2) comprises rotor blades (2a, 2b) that form a main rotor disc (3) which defines a compound helicopter perimeter (3a). The fixed wing arrangement (5) is completely arranged within the compound helicopter perimeter (3a) with the upper wing (6) connected to an upper fuselage section (4d) and the lower wing (7) connected to a lower fuselage section (4c). The lateral boom (14a) extends behind the lower wing (7) in a longitudinal direction (1a), spaced apart from the fuselage (4), and is connected to a vertical fin (17a).

## Description

The invention is related to a compound helicopter with a fuselage, a main rotor that is at least adapted for generating lift in operation, and a fixed wing arrangement that is laterally extending from the fuselage.

Conventional helicopters are typically characterized by the use of a main rotor and a tail boom with an auxiliary tail rotor that is adapted to counter torque. In addition to the tail rotor, the tail boom often has stabilizing vertical and horizontal tail planes that are mounted, together with the tail rotor, at the aft portion of the tail boom.

The tail boom of modern helicopters is essentially a closed cylindrical structure which extends rearward of the fuselage. The tail boom is typically designed either as a fish tail, which is characterized by a smooth transition from the fuselage to the tail boom structure, or as a beam tail, which extends from the upper portion of the rear fuselage.

The tail boom represents a relatively long aft structural prolongation with respect to the longitudinal extension of the fuselage, because it is intended to provide for a large lever arm for the tail surfaces with respect to the helicopter's center of gravity which essentially corresponds to a respective rotor mast position. A large lever arm enables a reduction in size of the vertical and horizontal tail surfaces and the power and rotor disc size required by the tail rotor to counter torque.

At high forward velocities, the vertical surfaces at the tail boom are typically designed to provide for the passive anti-torque capabilities, as well as for directional flight stability. The horizontal tail surfaces are designed to provide for sufficient longitudinal flight stability.

Typically, conventional helicopters suffer from the interaction of the main rotor wake and the horizontal tail planes, especially at hover and small forward speeds. Therefore, in order to reduce the interaction of the main rotor wake and the horizontal tail planes, the tail planes and the tail rotor are typically arranged outside the perimeter of the main rotor disc when looked at the helicopter from above.

However, tail booms have a negative effect on the overall dynamic behavior of the helicopter. For example, helicopters with tail booms often suffer from tail shake phenomenon and structural fatigue issues. Furthermore, tail boom ground strikes do happen frequently in practice and the corresponding loads often are dimensioning for the tail boom junction. As a consequence of their size, tail booms often require a heavy dismountable junction to the fuselage for air transportation or for interchangeability requirements.

Compound helicopters and so-called convertiplanes are basically the most relevant concepts aiming to overcome horizontal flight deficiencies of conventional helicopters by introducing attributes of fixed-wing aircrafts to such conventional helicopters as a compromise. However, a compromise between both aircraft types has always to be conveniently adapted to a planned mission profile of a given helicopter.

An exemplary convertiplane is e. g. described in the document US 5,046,684 A. More specifically, the latter describes a tiltrotor aircraft with a fuselage and a fixed wing arrangement. On each side of the fuselage a first and a second wing are arranged. The first wing is fixed at substantially the bottom of the fuselage. The second wing is fixed at substantially the top of the fuselage, or fixed to a structure extending above the fuselage. At least one of the first and second wings has dihedral so that the wings converge to join or nearly join at their tips. Furthermore, unducted rotor means are provided for generating aerodynamic lift sufficient for highly efficient hovering flight and for propelling the tiltrotor aircraft at speeds approaching roughly four hundred knots in forward cruising flight. The unducted rotor means are supported on the first and second wings, at or near the tips of the first and second wings. They can be pivoted for operation in different orientations in hovering and forward flight respectively.

In other words, according to the document US 5,046,684 A, the tiltrotor aircraft features two fully tiltable rotors, one at each side of the fuselage, and which are respectively arranged at the tips of a joint wing of the fixed wing arrangement. In this fixed wing arrangement, the lower, i. e. first wing is straight and positively swept, and the upper, i. e. second wing is straight and exhibits a very pronounced negative sweep. The upper wing is anhedral and connects the tip of the lower wing of the fixed wing arrangement to the tip of the tiltrotor aircraft's fin.

In contrast to such a tiltrotor aircraft, winged compound helicopter configurations with separate propulsion units typically feature a monoplane design with one set of wing surfaces in cantilever design as shoulder-wing arrangement. A compound helicopter with lift compounding, thrust compounding or a combination of both basically aims to off-load a respective main rotor from its simultaneous lifting and propulsive duties to allow for higher forward speeds of the compound helicopter.

More specifically, lift compounding entails adding wings to a helicopter, hence enabling to increase an underlying load factor of the helicopter and to reach a higher maneuverability. This improves the efficiency of the helicopter at moderately high speed but at the expense of reduced efficiencies at lower forward speeds and in hover.

Thrust compounding implies the addition of essentially horizontally oriented auxiliary propulsion units to the helicopter. This has been typically accomplished by means of a single or a pair of propellers being driven by drive shafts powered by main turboshaft engines of the helicopter. The use of a pair of propulsion units has the advantage of providing for anti-torque capabilities without the need of an additional tail rotor, hence relativizing the inherent system complexity of the thrust compound configuration.

A more extended configuration of a compound helicopter includes both the addition of wings and propulsion units. In this case, lift during cruise is simultaneously provided by a given main rotor - in powered condition (usually addressed as "hybrid helicopter") or in autorotation ("autogyro" - mode) - and the wings. Higher forward speed is provided by horizontally oriented auxiliary propulsion units of the compound helicopter. The compound helicopter hence overcomes underlying rotor lift limits by means of the wings and underlying rotor thrust limits by means of the propulsion units. As a result, a higher load factor is obtained along with potential for higher speed. In particular, use of a pair of thrust propulsion units - opposed and both offset relative to each other and to a longitudinal axis of the compound helicopter - enables for a simultaneous torque correction.

Exemplary compound helicopters with two wing-mounted propellers defining the above-described propulsion units are described in the documents EP 2 690 011 B1, EP 3 141 478 B1, EP 4 008 628 B1, EP 3 865 402 B1, and EP 2 690 010 B1. These exemplary compound helicopters are all provided with fixed wing arrangements, as described hereinafter.

The document EP 2 690 011 B1 describes a compound helicopter with a fixed wing arrangement in the form of a joint-wing configuration, wherein a lower wing and an upper wing are provided on each side of the compound helicopter. Both wings are essentially straight and interconnected to each other at a wing interconnection region, and a pusher propeller is installed in the interconnection region behind associated trailing edges of both wings. This joint-wing configuration especially outstands by its improved mechanical efficiency in terms of less structural weight and larger stiffness, as well as by improved inherent operational safety characteristics and improved system integration, especially referring to an underlying integration of a main gear box and main landing gear of the compound helicopter.

The document EP 3 141 478 B1 describes a compound helicopter with a fuselage and at least one main rotor, said fuselage comprising a lower side and an upper side that is opposed to said lower side, said at least one main rotor being arranged at said upper side, wherein at least one propeller is provided and mounted to a fixed wing arrangement that is laterally attached to said fuselage, said fixed wing arrangement comprising at least one upper wing that is arranged at an upper wing root joint area provided at said upper side of said fuselage and at least one lower wing that is arranged at a lower wing joint area provided at said lower side of said fuselage, said upper and lower wings being at least interconnected at an associated interconnection region.

In addition, document EP 4 008 628 B1 describes a helicopter with a similar architectural arrangement as in EP 2 690 011 B1 and EP 3 141 478 B1, but incorporating an alternative landing gear arrangement with two central tandem main landing gears and two retractable outrigger wheels at the outermost tip of the joined wing.

However, the above described compound helicopters all feature tail booms that have a negative effect on the overall dynamic behavior of the helicopters as described above. Moreover, the use of conventional tail-booms limits the mission profiles of the compound helicopters due to a lack of rear on-boarding capabilities and hence reduces the operational efficiency and versatility of these compound helicopters.

The document EP 3 865 402 B1, in turn, describes a compound helicopter with joined wings and pusher propellers mounted at the intersection points of respective upper and lower wings. The compound helicopter is characterized by the absence of a traditional tail boom and the arrangement of an empennage within a rearward extension of the lower rear fuselage and the inboard lower wings. Hence, the extension of the fuselage and the inboard wing portions merge with the horizontal plane forming a blended horizontal plane allocated at the lower sections of the vehicle. Vertical fins extend upwardly from the blended horizontal plane at its distal lateral extremities. This configuration exploits the inherent stabilizing effect of the staggered joined wings targeting a reduction of the structural mass, overall size of the helicopter and the avoidance of dynamic challenges associated to traditional tail booms.

However, the above-described compound helicopter is still suboptimal facing rear loading capabilities and the required safety for the operators approaching the fuselage from the rear. Moreover, the vertical tail surfaces are required to be considerably larger attaining similar directional stability performance in comparison to the conventional arrangement as described in e. g. EP 3 141 478 B1. As such, the vertical tail surfaces as largely loaded cantilevered structural parts will relatively reduce the structural and dynamic advantages of the concept.

The document EP 2 690 010 B1, in turn, describes a compound helicopter with a main rotor providing lift, a pair of additional propulsion devices providing thrust and anti-torque, and a fixed wing structure on each side providing additional lift during horizontal cruise flight. The propulsion devices are arranged at each side of a fuselage body with two tail booms, one arranged at each side of said fuselage body, each of both tail booms having one of both propulsion devices arranged at its boom rear end. Each of the two tail booms houses an engine and a drive shaft driving the corresponding propulsion device. However, this arrangement would lead to a lack of inherent safety characteristics facing an aircraft approach from the back and to challenges associated with the proper allocation of the overall center of gravity of the helicopter and with the required propeller ground clearance during landing, being consequently deemed to be substantially less efficient than a joined wing concept.

It is, therefore, an object of the present invention to provide a new compound helicopter that overcomes the above described drawbacks. Such a new compound helicopter should be suitable for ensuring rear loading capabilities with inherent safety characteristics whilst keeping a high structural and operational performance.

This object is solved by a compound helicopter comprising the features of claim 1. More specifically, the compound helicopter comprises a fuselage, a main rotor, a fixed wing arrangement, a propeller, and a lateral boom. The fuselage extends in a longitudinal direction from a front fuselage section to a rear fuselage section, and in a vertical direction from a lower fuselage section to an upper fuselage section. The main rotor is arranged at the upper fuselage section and at least adapted for generating lift in operation. The main rotor comprises at least two rotor blades that form a main rotor disc during rotation of the main rotor, wherein the main rotor disc defines a compound helicopter perimeter. The fixed wing arrangement is completely arranged within the compound helicopter perimeter and laterally extending from the fuselage. The fixed wing arrangement comprises a joint wing with an upper wing that is connected to the upper fuselage section and a lower wing that is connected to the lower fuselage section, wherein the upper wing is connected to the lower wing at an interconnection region. The propeller is mounted to the interconnection region and at least adapted for generating forward thrust in operation. The lateral boom is connected to the lower wing and extending behind the lower wing in the longitudinal direction, wherein the lateral boom is spaced apart from the fuselage and connected to a vertical fin that extends in the vertical direction.

In general, the compound helicopter according to the present invention incorporates preferably at each side of the fuselage a joined wing with an upper and a lower wing in staggered configuration, meaning that the lower wing is - at least at a certain portion - allocated more aft than the upper wing. A propeller, preferably a pusher propeller, is installed at each intersection of an upper and lower wing, preferably behind the joined wings. Each upper wing interconnects the upper fuselage section and each lower wing interconnects the lower part of the rear fuselage section.

More specifically, the lay-out of the compound helicopter according to the present invention exploits preferably the advantages of the inherent weathervane effect of the joined wings in staggered configuration which substantially reduces the required size of a horizontal tail plane facing pitch stability in flight. Advantageously, the reduction of the required horizontal tail plane surfaces enables the elimination of a conventional central tail boom and the associated challenges in terms of dynamic behavior, stiffness, strength, and interactions with main rotor downwash. As such, the compound helicopter according to the present invention neither includes a tail boom as an extension of the rear fuselage section, nor an empennage, e. g. vertical fins and/or horizontal planes attached at an end of a central tail boom at a region close or beyond the main rotor disc perimeter, i. e. the compound helicopter perimeter.

Illustratively, the lower wing is composed of an inboard stub-wing and, more particularly, of an inboard section, and an outboard wing and, more particularly, an outboard section. The inboard stub-wing covers preferably at least one third of the span of the lower wing. A lateral boom is arranged at the intersection between the inboard stub-wing and the outboard wing and extends to the rear of the compound helicopter within the main rotor disc, i. e. the compound helicopter perimeter. As a result, the compound helicopter features preferably two lateral booms, e. g. twin booms, mounted on the lower wing and separated by each other in lateral direction of the fuselage, distantly apart from the fuselage and distantly apart from respective lateral rotor discs of the propellers, i. e., propeller discs. Advantageously, the lateral booms exhibit a substantially smaller cross section as state-of-the art single fish-tail booms.

Illustratively, the rear fuselage section ends within the longitudinal extension of the lateral booms, which reduces the rearward extension of the compound helicopter. However, an underlying directional stability performance as well as passive anti-torque capabilities of the compound helicopter are still ensured by the reciprocal increase of the vertical fin surfaces. More specifically, a vertical fin is preferably arranged at the rearmost end of each one of both lateral booms. Both such vertical fins are preferably allocated well within the main rotor disc perimeter (vertical footprint). The surface of the fins is preferentially substantially larger than the one of conventional arrangements with a single central tail boom in order to ensure proper directional stability capabilities with reduced effective lever arms, e. g. a respective distance between an aerodynamic center of the fins and a center of gravity of the compound helicopter which is close to the main rotor axis.

In general, larger fins may generate larger loads. The present invention however introduces an additional support at the vertical fins which is provided by the horizontal tail plane. The horizontal tail plane preferably interconnects the vertical fin with the upper rear portion of the fuselage. Due to the inherent directional stability characteristics of the compound helicopter using staggered joined wings, the size of the horizontal tail plane is relatively small in comparison to the vertical fins. The horizontal tail plane hence provides for a very stiff lateral support on the upper portions of the vertical fin in addition to the support provided by the lateral boom on the lower portion of the vertical fin.

Advantageously, the horizontal tail plane fixation to the fin can be arranged close to the aerodynamic center or the center of gravity of the vertical fin. Illustratively, the fixation may be allocated distantly apart from the fin tip. In other words, the vertical fin extends preferably upwardly beyond the allocation of the horizontal tail plane fixation, exemplarily by at least one fourth of the total span of the vertical fin. As a result, the lateral aerodynamic load and the inertia load is mainly transferred by the stiff horizontal tail plane in tension/compression to the fuselage. Consequently, the lateral booms are low loaded in bending and torsion - in contrast to the conventional long central tail booms - which allows for a low cross-section, low weight, and low-drag of the lateral booms.

Advantageously, the lateral booms, being low loaded elements, may be 50% lighter than the conventional central tail booms because of their reduced longitudinal extensions, lower cross sections, and low loads. Furthermore, in comparison to a conventional central tail boom, preliminary evaluations also indicate a reduction of the sectional loads of the vertical fins by 30%. As a result, the fins may be just 20% heavier even though the dimensions and loads have doubled. This would, in total, lead to a possible overall weight reduction, for lateral booms and vertical fins, of about 20% in comparison to the conventional arrangement.

Furthermore, additional weight savings due to the uninterrupted and efficient design of sub wings and center fuselage would further be achieved. As a result of these weight savings being at aft of the original allocation of the center of gravity, the center of gravity advantageously moves more to the front of the compound helicopter, hence, further improving the stabilizing performance of fins and horizontal surfaces and indirectly further reducing their size, loading, and weight. These results highlight the outstanding potential of this arrangement which combines an improvement of inherent safety characteristics for rear loading capabilities with improved overall structural mass and operational efficiency.

More specifically, the larger vertical fins mounted on the corresponding lateral booms, which are laterally spaced apart from each other and from the fuselage, allow the generation of a well-protected access corridor to the rear portion of the helicopter, which results in an advantageous architecture for missions requiring rear loading capabilities. For instance, the rear fuselage section may feature a rear door located at the aft extremity of the fuselage, thus, allowing rear loading capabilities. The horizontal tail planes are preferably allocated above the perimeter of such a rear door. The distance between both lateral booms and the respective vertical fins defines, as described above, a boarding corridor area to safely access the rear door for boarding purposes. This configuration allows to adapt the design of the rear portion of the compound helicopter according to the specific needs of a rear access and loading which is especially demanding in terms of access safety for operators facing the lateral propellers installed behind the joined wings. The larger size of the vertical fins and their allocation close to the lateral rotors, i. e., propellers, provide for an inherent safety characteristic, physically separating and shielding the boarding corridor area delimited by the lateral booms and the vertical fins with respect to the lateral rotors.

If desired, an additional lateral winglet can be implemented extending laterally from the joined wings and, more particular, from respective lateral propeller nacelles beyond the lateral rotor discs to improve the safety conditions around the compound helicopter on ground. The chord of the winglet is preferably substantially smaller than the chord of the joined wings in order not to negatively impact the generation of tip vortices, since these are proven to be advantageous in terms of the pusher propeller efficiency by reducing the power demand for a given thrust in high-speed flight.

Furthermore, the low loaded lateral booms can advantageously be used to house at least partially a rearwardly retractable main landing gear. For instance, the main landing gear may be allocated at the perimeter of the intersection of the inboard stub-wing and the outboard lower wing. Advantageously, the main landing gear is rearwardly retractable and at least partially housed within the corresponding lateral boom in retracted position. This allows to avoid disturbance of the inboard stub-wing for housing of the main landing gear as it is e. g. the case in the arrangement described in EP 3 141 478 B1. The inboard stub-wing and the fuselage center are highly loaded structural portions directly impacting the structural efficiency of the airframe. For the present invention, being unaffected by the landing gear housing, the inboard stub-wing and the center fuselage can be efficiently designed. The landing gear is housed within a low loaded structural member instead of being housed within a highly loaded structural member, which may lead to a further weight saving. The closed volumes of the inboard stub-wings and the center fuselage further improve the fuel storage and buoyancy capabilities, further improving the mission and operational characteristics of the compound helicopter.

According to some aspects, the compound helicopter may comprise a tail plane that connects the vertical fin to the upper fuselage section.

According to some aspects, the tail plane may be at least essentially arranged in parallel to the upper wing.

According to some aspects, the tail plane may be attached to the vertical fin at an associated fixation point.

If desired, the tail plane may extend from the associated fixation point with a predetermined angle relative to a lateral direction of the fuselage toward the upper fuselage section.

According to some aspects, the associated fixation point may be located close to an aerodynamic center and/or a center of gravity of the vertical fin.

According to some aspects, the lateral boom and the vertical fin are completely arranged within the compound helicopter perimeter.

According to some aspects, a maximum width of the lateral boom may be smaller than a minimum chord of the upper wing or a minimum chord of the lower wing.

According to some aspects, the lateral boom with the vertical fin may extend in the longitudinal direction beyond a rear fuselage end of the fuselage.

According to some aspects, the compound helicopter may further comprise a rear door that is arranged at a rear fuselage end of the fuselage.

According to some aspects, the rear door may be a ramp-type door.

According to some aspects, the lower wing may comprise an inboard section and an outboard section, wherein the inboard section is connected to the lower fuselage section.

According to some aspects, the outboard section may be connected to the inboard section at a lower wing joint area. If desired, the lateral boom may be connected to the lower wing at the lower wing joint area.

According to some aspects, the outboard section may be connected to the upper wing at the interconnection region.

According to some aspects, a chord of the outboard section may be smaller than a chord of the inboard section.

According to some aspects, the joint wing may be arranged on a port side of the compound helicopter, wherein another joint wing may be arranged on a starboard side of the compound helicopter.

If desired, the other joint wing may comprise another upper wing that is connected to the upper fuselage section, another lower wing that is connected to the lower fuselage section, another lateral boom that is connected to the other lower wing, and another vertical fin that is connected to the other lateral boom.

According to some aspects, the vertical fin and the other vertical fin may spatially delimit a rear boarding corridor area.

According to some aspects, the compound helicopter may comprise a propeller housing that is arranged at the interconnection region for housing the propeller.

If desired, a winglet may be mounted to the propeller housing and extend outwardly in the lateral direction.

According to some aspects, the winglet may be extending outwardly in the lateral direction beyond a propeller disc of the propeller.

According to some aspects, the compound helicopter may comprise a wheel-type landing gear with a main landing gear that is at least partially retractable into the lateral boom.

Preferred embodiments are outlined by way of example in the following description with reference to the attached drawings. In these attached drawings, identical or identically functioning components and elements are labeled with identical reference numbers and characters and are, consequently, only described once in the following description.
- Figure 1 shows a top view of an illustrative compound helicopter in accordance with some embodiments,
- Figure 2 shows a side view of the illustrative compound helicopter of Figure 1 in accordance with some embodiments, and
- Figure 3 shows a rear view of the illustrative compound helicopter of Figure 1 in accordance with some embodiments.

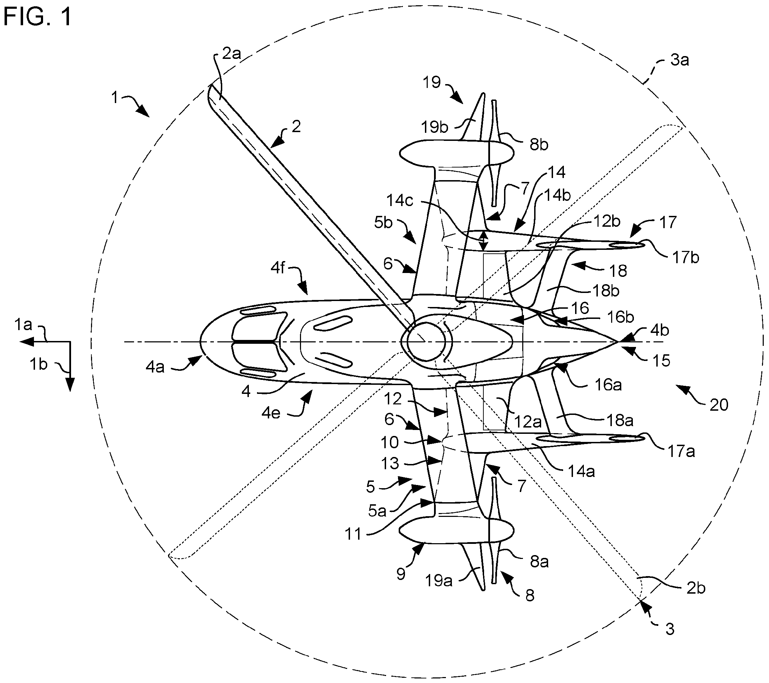

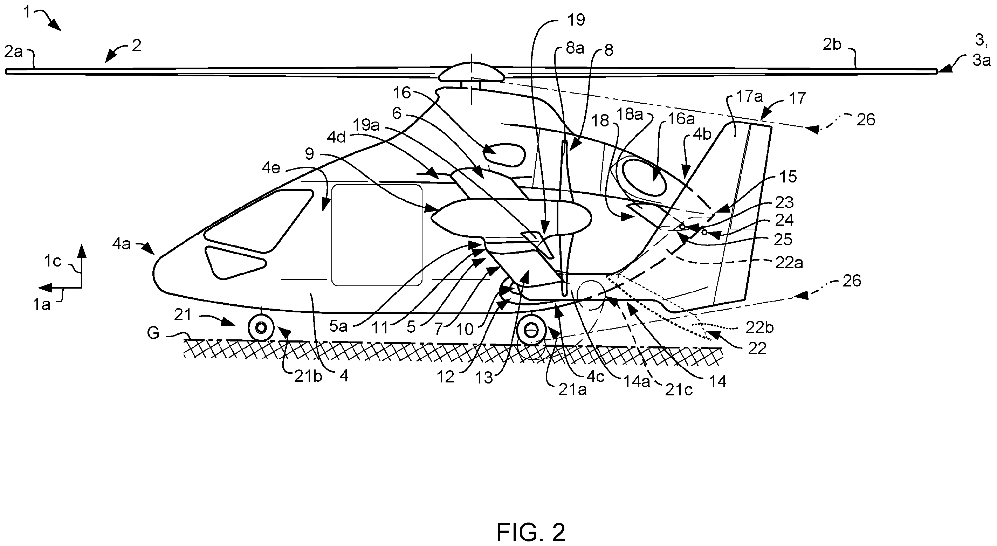

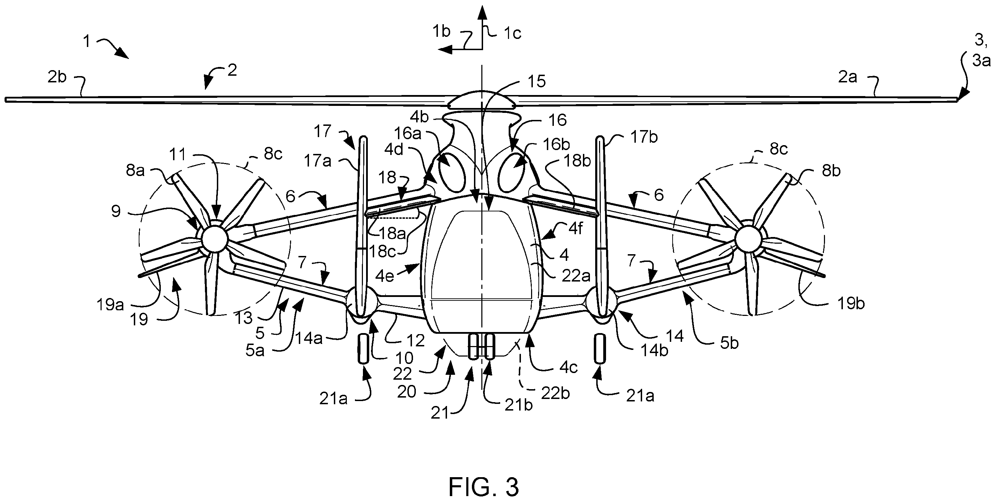

Figure 1 to Figure 3 show an illustrative compound helicopter 1. The compound helicopter 1 extends in a longitudinal direction, a lateral resp. transversal direction, and a vertical direction. According to Figure 1, the longitudinal direction and the lateral resp. transversal direction are respectively oriented along a longitudinal axis 1a and a lateral resp. transversal axis 1b of the compound helicopter 1 and are, therefore, also referred to as "longitudinal direction 1a" and "lateral direction 1b" hereinafter. According to Figure 2 and Figure 3, the vertical direction is oriented along a vertical axis 1c and, therefore, also referred to as "vertical direction 1c" hereinafter. It is understood that, unless explicitly stated otherwise, an extension of an object in a certain direction can be understood as extending positively or negatively along the associated axis and/or in parallel thereto.

The longitudinal direction 1a is in parallel to the roll axis inherent to the compound helicopter 1. The lateral direction 1b is perpendicular to the roll axis and in parallel to the pitch axis of the compound helicopter 1. The plane formed by the longitudinal direction 1a and the lateral direction 1b may be considered to be "horizontal" and may correspond to a top view plane of the compound helicopter 1 as shown in Figure 1. The plane formed by the longitudinal direction 1a and the lateral direction 1b is sometimes also referred to as the horizontal plane or the X-Y plane.

The vertical direction 1c is in parallel to the yaw axis of the compound helicopter 1 and is oriented perpendicular with respect to the X-Y plane. The plane formed by the longitudinal direction 1a and the vertical direction 1c may correspond to a side view plane of the compound helicopter 1 as illustrated in Figure 2. The plane formed by the longitudinal direction 1a and the vertical direction 1c is sometimes also referred to as the X-Z plane.

The plane formed by the lateral direction 1b and the vertical direction 1c may correspond to a rear-view plane of the compound helicopter 1 as illustrated in Figure 3. The plane formed by the lateral direction 1b and the vertical direction 1c is sometimes also referred to as the Y-Z plane.

It should be noted that for the remainder of this description the expression "extending in the longitudinal direction 1a" means that the respective extension is predominantly in the longitudinal direction 1a. However, the extension can in addition also have a predetermined angle with respect to the vertical direction 1c and/or the lateral direction 1b. As an example, an object with an extension that deviates between ±45° from the longitudinal direction 1a may be called an object that extends in the longitudinal direction 1a.

Similarly, the expression "extending in the lateral direction 1b" means that the extension is predominantly in the lateral direction 1b. However, the extension can in addition also have a predetermined angle with respect to the vertical direction 1c and/or the longitudinal direction 1a. As an example, an object with an extension that deviates between ±45° from the lateral direction 1b may be called an object that extends in the lateral direction 1b.

Moreover, the expression "extending in the vertical direction 1c" means that the extension is predominantly in the vertical direction 1c. However, the extension can in addition also have a predetermined angle with respect to the lateral direction 1b and/or the longitudinal direction 1a. As an example, an object with an extension that deviates between ±45° from the vertical direction 1c may be called an object that extends in the vertical direction 1c.

More specifically, Figure 1 shows the compound helicopter 1 with a fuselage 4. The fuselage 4 extends in the longitudinal direction 1a from a front fuselage section 4a to a rear fuselage section 4b and in the lateral direction 1b between a port side 4e and a starboard side 4f. The rear fuselage section 4b illustratively forms a rear fuselage end 15.

The compound helicopter 1 comprises a main rotor 2 that is at least adapted for generating lift in operation. The main rotor 2 is arranged on top of the compound helicopter 1, i. e. at an upper fuselage section (4d in Figure 2 and Figure 3). If desired, an engine exhaust of an engine 16 that drives the at least one main rotor 2 may be arranged at the upper fuselage section. By way of example, one engine exhaust 16a is provided on the port side 4e of the fuselage 4 and another engine exhaust 16b is provided on the starboard side 4f of the fuselage 4.

Illustratively, the main rotor 2 includes at least two rotor blades 2a, 2b. The at least two rotor blades 2a, 2b form a main rotor disc 3 during rotation of the at least one main rotor 2. The main rotor disc 3, in turn, defines a compound helicopter perimeter 3a. Seen from above, the compound helicopter 1 is completely arranged within the compound helicopter perimeter 3a.

As shown in Figure 1, the compound helicopter 1 includes a fixed wing arrangement 5. The fixed wing arrangement 5 illustratively comprises at least a joint wing 5a with an upper wing 6 and a lower wing 7 arranged, by way of example, on the port side 4e of the fuselage 4. The upper wing 6 is connected to the lower wing 7 at an interconnection region 11. The upper wing 6 and the lower wing 7 are illustratively arranged in a staggered configuration, which means that the lower wing 7 is located - at least partially - essentially more aft than the upper wing 6.

Furthermore, the compound helicopter 1 comprises at least one propeller 8. The at least one propeller 8 is at least adapted for generating forward thrust in operation. The at least one propeller 8 is mounted to the fixed wing arrangement 5. Illustratively, a propeller 8a is mounted to the interconnection region 11 of the upper wing 6 and the lower wing 7 of the joint wing 5a. Preferably, the propeller 8a is a pusher propeller.

By way of example, the propeller 8a may comprise at least two propeller blades. The at least two propeller blades form a propeller disc 8c of the propeller 8a during rotation thereof. Illustratively, the compound helicopter 1 comprises a propeller housing 9, such as a propeller nacelle, that is arranged at the interconnection region 11 for housing the propeller 8a.

If desired, at least one winglet 19 may be provided and mounted to the propeller housing 9. Illustratively, a winglet 19a is mounted to the propeller housing 9 of the joined wing 5a and extends outwardly in the lateral direction 1b. In a preferred realization, the winglet 19a is extending outwardly in the lateral direction 1b beyond the propeller disc 8c of the propeller 8a. As such, in the lateral direction 1b, a tip of the winglet 19a may be located on the outermost edge of the fixed wing arrangement 5.

As shown, the fixed wing arrangement 5 is extending laterally from the fuselage 4, i. e. in the lateral direction 1b. Seen from above, the fixed wing arrangement 5 is completely arranged within the compound helicopter perimeter 3a.

Illustratively, the lower wing 7 of the joined wing 5a may comprise an inboard section 12 and an outboard section 13. The outboard section 13 may be connected to the inboard section 12 at a lower wing joint area 10.

If desired, a chord of the outboard section 13 may be smaller than a chord of the inboard section 12. Furthermore, the inboard section 12 of the lower wing 7 of the joined wing 5a may be provided with a lower wing flap 12a which might advantageously be used to trim and set the lower wing 7.

According to the present invention, the compound helicopter 1 comprises at least one lateral boom 14. More specifically, a lateral boom 14a is connected to the lower wing 7 of the joined wing 5a. The lateral boom 14a may be connected to the lower wing 7 at the lower wing joint area 10. If desired, a maximum width 14c of the lateral boom 14a may be smaller than a minimum chord of the upper wing 6 or a minimum chord of the lower wing 7 of the joined wing 5a.

Illustratively, the lateral boom 14a extends behind the lower wing 7 of the joined wing 5a in the longitudinal direction 1a. The lateral boom 14a is also spaced apart from the fuselage 4. Illustratively, neither the fuselage 4 nor the lateral boom 14a extend beyond the main rotor disc 3, i. e. outside of the compound helicopter perimeter 3a.

Furthermore, the compound helicopter 1 comprises at least one vertical fin 17. Illustratively, a vertical fin 17a is connected to the lateral boom 14a. Preferably, the lateral boom 14a and the vertical fin 17a are completely arranged within the compound helicopter perimeter 3a.

Illustratively, the vertical fin 17a is arranged at an aft end of the lateral boom 14a. The lateral boom 14a with the vertical fin 17a may extend in the longitudinal direction 1a beyond the rear fuselage end 15 of the fuselage 4.

By way of example, the compound helicopter 1 further comprises at least one horizontal tail plane 18. Illustratively, a horizontal tail plane 18a connects the vertical fin 17a to the fuselage 4. The horizontal tail plane 18a preferably connects the vertical fin 17a to the upper fuselage section (4d in Figure 2).

At this point, it should be noted that the compound helicopter 1 may be symmetrical with respect to the longitudinal direction 1a. More specifically, the port side 4e of the compound helicopter 1 may be configured in a substantially mirror-symmetric manner with respect to the starboard side 4f of the compound helicopter 1. For instance, the compound helicopter 1 may comprise a substantially mirror-symmetric fixed wing arrangement 5 having the joint wing 5a and another joint wing 5b. Nevertheless, advantageously and alternatively, the vertical setting of the vertical fins 17a and 17b might be slightly different and hence non-symmetric to provide for an inherent passive anti-torque during high-speed forward flight.

As described above, the joint wing 5a is illustratively arranged on the port side 4e of the compound helicopter 1. Thus, the other joint wing 5b may be arranged on the starboard side 4f of the compound helicopter 1.

More specifically, the other joint wing 5b may comprise another upper wing 6 which is connected to another lower wing 7. The other lower wing 7 may comprise another outboard section 13 and another inboard section 12, which may be provided with another lower wing flap 12b. Furthermore, another propeller 8b may be provided for the other joint wing 5b, as well as another winglet 19b. Moreover, another lateral boom 14b may be connected to the other lower wing 7 of the joined wing 5b. The other lateral boom 14b may be connected to another vertical fin 17b. The other vertical fin 17b may be connected by another tail plane 18b to the fuselage 4, in particular to the upper fuselage section (4d in Figure 2).

At this point, it should be noted that, for simplicity and clarity, not all the structures on the starboard side 4f of the compound helicopter 1 are described in detail. In fact, only the structures on the port side 4e of the compound helicopter 1 are representatively described in more detail throughout the present disclosure and may be adapted for structures on both sides partially or entirely.

Illustratively, the vertical fin 17a and the other vertical fin 17b may spatially delimit a rear boarding corridor area 20. Illustratively, the rear boarding corridor area 20 between the vertical fin 17a and the other vertical fin 17b encompasses the rear fuselage end 15 of the fuselage 4. In a preferred realization, the rear boarding corridor area 20 is completed shielded by the vertical fin 17a and the other vertical fin 17b, as described in more detail at Figure 2 below.

Figure 2 shows the compound helicopter 1 of Figure 1 with the fuselage 4 to further illustrate its extension in vertical direction 1c from a lower fuselage section 4c to an upper fuselage section 4d. According to Figure 1, the compound helicopter 1 comprises the main rotor 2, the fuselage 4, the fixed wing arrangement 5, the propellers 8, the lateral booms 14, the vertical fins 17, and the tail planes 18. As described above with reference to Figure 1, the main rotor 2 is arranged at an upper fuselage section 4d and is at least adapted for generating lift in operation. The main rotor 2 includes the rotor blades 2a, 2b which form the main rotor disc 3 that defines the compound helicopter perimeter 3a.

It should be noted that Figure 2 shows the port side 4e of the compound helicopter 1 of Figure 1. Therefore, the following description of the port side 4e and the components arranged thereon is understood to be representative for both sides of the compound helicopter 1, i. e. the port side 4e and the starboard side 4f.

The compound helicopter 1 is illustratively standing on ground G. By way of example, the compound helicopter 1 comprises a wheel-type landing gear 21 which is shown extended on the ground G. The wheel-type landing gear 21 may comprise a nose landing gear 21b and a main landing gear 21a. Illustratively, the main landing gear 21a may at least partially be retractable into the lateral boom 14a into a retracted position 21c. As such, the main landing gear 21a in the retracted position 21c may be arranged substantially behind the lower wing 7 of the joined wing 5a in the longitudinal direction 1a.

Illustratively, the lower wing 7 of the joined wing 5a is connected to the lower fuselage section 4c, whereas the upper wing 6 of the joined wing 5a is connected to the upper fuselage section 4d. Illustratively, the upper wing 6 interconnects the upper fuselage section 4d close to a respective rotation axis of the main rotor 2. The lower wing 7 may interconnect the lower fuselage section 4c at the rear fuselage section 4b.

More particularly, the inboard section 12 of the lower wing 7 is connected to the lower fuselage section 4c. The outboard section 13 is illustratively connected to the inboard section 12 at the lower wing joint area 10 and to the upper wing 6 at the interconnection region 11.

Illustratively, at the lower wing joint area 10, the lateral boom 14a is connected to the lower wing 7. By way of example, the lateral boom 14a is extending behind the lower wing 7 in the longitudinal direction 1a. The lateral boom 14a is illustratively connected to the vertical fin 17a that extends in the vertical direction 1c.

By way of example, the vertical fin 17a is connected to the upper fuselage section 4d via the horizontal tail plane 18a. Illustratively, the horizontal tail plane 18a may be attached to the vertical fin 17a at an associated fixation point 25. If desired, a fuselage fixation point connecting the horizontal tail plane 18a to the fuselage 4 may be arranged below the engine exhaust 16a.

Illustratively, the tail plane 18a may at least essentially be arranged in parallel to the upper wing 6 of the joined wing 5a. More specifically, the tail plane 18a may extend from the associated fixation point 25 with a predetermined angle (e. g. predetermined angle 18c in Figure 3) relative to the lateral direction 1b toward the upper fuselage section 4d.

The associated fixation point 25 on the vertical fin 17a is illustratively allocated roughly at half of the fin span. In other words, approximately half of the vertical fin 17a is below the associated fixation point 25, and the other halve of the vertical fin 17a is above the associated fixation point 25.

If desired, the associated fixation point 25 may be located close to an aerodynamic center 23 and/or a center of gravity 24 of the vertical fin 17a. Such configuration would allow reducing the reaction bending and torsion loads on the lateral boom 14a, reducing the load level and improving the dynamic behavior of the relative larger vertical fin 17a.

As shown, the vertical fin 17a may have surfaces that are considerably larger than those of conventional vertical fins. By way of example, aerodynamic loads and dynamic loads may be stiffly and efficiently reacted by the horizontal tail plane 18a by tension/compression.

Illustratively, the vertical fin 17a is designed to ensure sufficient clearance to the ground G and to the main rotor blades 2a, 2b as denoted by clearance limits 26. By way of example, the large surfaces of the vertical fin 17a may well shield the rear boarding corridor area 20 at the rear fuselage end 15.

In a preferred realization, the compound helicopter 1 comprises a rear door 22 that is arranged at the rear fuselage end 15 of the fuselage 4. The rear fuselage end 15 is preferably located within the compound helicopter perimeter 3a.

If desired, the rear door 22 may be a ramp-type door. At the rear fuselage end 15, the rear door 22 may be operated between a closed position 22a and an opened position 22b. The rear door 22 in the closed position 22a is illustrated by a dashed line, whereas the rear door 22 in the opened position 22b is illustrated by a dotted line.

As shown in Figure 2, the rear door 22 in the opened position 22b may allow passengers or cargo boarding the fuselage 4 through the rear boarding corridor area 20 which is well shielded by the vertical fin 17a not only from the rotor blades 2a, 2b, but also from the propellers 8 that is located behind the joint wing 5a, as shown in further detail in Figure 3.

Figure 3 shows the compound helicopter of Figure 1 and Figure 2 with the main rotor 2, the fuselage 4, the fixed wing arrangement 5 including the joint wing 5a with the propeller 8a on the port side 4e and the other joint wing 5b with the other propeller 8b on the starboard side 4f, the lateral booms 14 including the lateral boom 14a on the port side 4e and the other lateral boom 14b on the starboard side 4f, the vertical fins 17 including the vertical fin 17a on the port side 4e and the other vertical fin 17b on the starboard side 4f, as well as the horizontal tail planes 18 including the horizontal tail plane 18a on the port side 4e and the other horizontal tail plane 18b on the starboard side 4f.

As shown in Figure 3, the lateral boom 14a and the other lateral boom 14b, as well as the vertical fin 17a and the other vertical fin 17b, are respectively spaced apart from the fuselage 4. Furthermore, the lateral boom 14a and the other lateral boom 14b are also spaced apart from the propeller 8a and the other propeller 8b, respectively, each of which illustratively forms a propeller disc 8c. As shown, the lateral boom 14a is spaced apart from the propeller disc 8c of the propeller 8a, and the other lateral boom 14b is spaced apart from the propeller disc 8c of the other propeller 8b. As a result, the rear boarding corridor area 20 foreseen at the rear fuselage end 15 with respect to the rear door 22 is shielded by the vertical fins 17a, 17b that are mounted on the lateral booms 14a, 14b.

As may further be seen from Figure 3, the horizontal tail plane 18a on the port side 4e may be arranged at least essentially in parallel to the upper wing 6 of the joined wing 5a. In any case, the tail plane 18a may extend from the associated fixation point 25 at the vertical fin 17a with a predetermined angle 18c relative to the lateral direction 1b toward the upper fuselage section 4d.

Likewise, on the starboard side 4f of the compound helicopter 1, the other vertical fin 17b may be connected to the upper fuselage section 4d via the other tail plane 18b. The other tail plane 18b may be arranged at least essentially in parallel to the upper wing 6 of the joined wing 5b. By way of example, the tail planes 18a, 18b are allocated above the perimeter of the rear door 22. Illustratively, the vertical fins 17a, 17b may both extend upwardly beyond the tail planes 18a, 18b as well as the allocation of the upper wings 6.

It should be noted that modifications to the above described embodiments are within the common knowledge of the person skilled in the art and, thus, also considered as being part of the present invention. It should further be noted that the drawings are only intended for schematically representing embodiments of the present invention and not for showing detailed constructions thereof.

For instance, the compound helicopter 1 of Figure 2 is shown with the retractable wheel-type landing gear 21. However, if desired, the wheel-type landing gear 21 may be unretractable or other types of landing gears may instead be provided and mounted, at least partially, to the lateral booms 14.

### Reference List

1 Compound helicopter
1a Longitudinal axis
1b Lateral resp. transversal axis
1c Vertical axis
2 Main Rotor
2a, 2b Rotor blade
3 Main Rotor Disc
3a Compound helicopter perimeter
4 Fuselage
4a Front fuselage section
4b Rear fuselage section
4c Lower fuselage section
4d Upper fuselage section
4e Port side
4f Starboard side
5 Fixed wing arrangement
5a, 5b Joint wings
6 Upper wing
7 Lower wing
8 Propellers
8a, 8b Propeller
8c Propeller disc
9 Propeller housing
10 Lower wing joint area
11 Interconnection region of upper and lower wings
12 Lower wing inboard section
12a, 12b Lower wing flaps
13 Lower wing outboard section
14 Lateral booms
14a, 14b Lateral boom
14c Maximum lateral boom width
15 Rear fuselage end
16 Engines
16a, 16b Engine exhaust
17 Vertical fins
17a, 17b Vertical fin
18 Horizontal tail planes
18a, 18b Horizontal tail plane
18c Predetermined angle
19 Winglets
19a, 19b Winglet
20 Boarding corridor area
21 Wheel-type landing gear
21a Main landing gear
21b Nose landing gear
21c Retracted main landing gear
22 Rear door
22a Closed rear door
22b Opened rear door
23 Aerodynamic center of vertical fin
24 Center of gravity of vertical fin
25 Fixation point tail plane to fin
26 Clearance limits
G Ground

## Claims

1. A compound helicopter (1) comprising:
a fuselage (4) that extends in a longitudinal direction (1a) from a front fuselage section (4a) to a rear fuselage section (4b), and in a vertical direction (1c) from a lower fuselage section (4c) to an upper fuselage section (4d);
a main rotor (2) that is arranged at the upper fuselage section (4d) and at least adapted for generating lift in operation, the main rotor (2) comprising at least two rotor blades (2a, 2b) that form a main rotor disc (3) during rotation of the main rotor (2), wherein the main rotor disc (3) defines a compound helicopter perimeter (3a);
a fixed wing arrangement (5) that is completely arranged within the compound helicopter perimeter (3a) and laterally extending from the fuselage (4), the fixed wing arrangement (5) comprising a joint wing (5a) with an upper wing (6) that is connected to the upper fuselage section (4d), and a lower wing (7) that is connected to the lower fuselage section (4c), wherein the upper wing (6) is connected to the lower wing (7) at an interconnection region (11);
a propeller (8a) that is mounted to the interconnection region (11) and at least adapted for generating forward thrust in operation; and
a lateral boom (14a) that is connected to the lower wing (7) and extending behind the lower wing (7) in the longitudinal direction (1a), wherein the lateral boom (14a) is spaced apart from the fuselage (4) and connected to a vertical fin (17a) that extends in the vertical direction (1c).

2. The compound helicopter (1) of claim 1, further comprising:
a tail plane (18a) that connects the vertical fin (17a) to the upper fuselage section (4d).

3. The compound helicopter (1) of claim 2, wherein the tail plane (18a) is at least essentially arranged in parallel to the upper wing (6).

4. The compound helicopter (1) of claim 2 or 3, wherein the tail plane (18a) is attached to the vertical fin (17a) at an associated fixation point (25), and wherein the tail plane (18a) extends from the associated fixation point (25) with a predetermined angle (18c) relative to a lateral direction (1b) of the fuselage (4) toward the upper fuselage section (4d).

5. The compound helicopter (1) of claim 4, wherein the associated fixation point (25) is located close to an aerodynamic center (23) and/or a center of gravity (24) of the vertical fin (17a).

6. The compound helicopter (1) of any one of the preceding claims, wherein the lateral boom (14a) and the vertical fin (17a) are completely arranged within the compound helicopter perimeter (3a).

7. The compound helicopter (1) of any one of the preceding claims, wherein a maximum width (14c) of the lateral boom (14a) is smaller than a minimum chord of the upper wing (6) or a minimum chord of the lower wing (7).

8. The compound helicopter (1) of any one of the preceding claims, wherein the lateral boom (14a) with the vertical fin (17a) extends in the longitudinal direction (1a) beyond a rear fuselage end (15) of the fuselage (4).

9. The compound helicopter (1) of any one of the preceding claims, further comprising:
a rear door (22) that is arranged at a rear fuselage end (15) of the fuselage (4).

10. The compound helicopter (1) of claim 9, wherein the rear door (22) is a ramp-type door.

11. The compound helicopter (1) of any one of the preceding claims, wherein the lower wing (7) comprises an inboard section (12) and an outboard section (13), wherein the inboard section (12) is connected to the lower fuselage section (4c), wherein the outboard section (13) is connected to the inboard section (12) at a lower wing joint area (10) and to the upper wing (6) at the interconnection region (11), and wherein the lateral boom (14a) is connected to the lower wing (7) at the lower wing joint area (10).

12. The compound helicopter (1) of claim 11, wherein a chord of the outboard section (13) is smaller than a chord of the inboard section (12).

13. The compound helicopter (1) of any one of the preceding claims, wherein the joint wing (5a) is arranged on a port side (4e) of the compound helicopter (1), wherein another joint wing (5b) is arranged on a starboard side (4f) of the compound helicopter (1), wherein the other joint wing (5b) comprises another upper wing (6) that is connected to the upper fuselage section (4d), another lower wing (7) that is connected to the lower fuselage section (4c), another lateral boom (14b) that is connected to the other lower wing (7), and another vertical fin (17b) that is connected to the other lateral boom (14b), and wherein the vertical fin (17a) and the other vertical fin (17b) spatially delimit a rear boarding corridor area (20).

14. The compound helicopter (1) of any one of the preceding claims, further comprising a propeller housing (9) that is arranged at the interconnection region (11) for housing the propeller (8a), wherein a winglet (19a) is mounted to the propeller housing (9) and extending outwardly in a lateral direction (1b) of the fuselage (4), preferably beyond a propeller disc (8c) of the propeller (8a).

15. The compound helicopter (1) of any one of the preceding claims, further comprising a wheel-type landing gear (21) with a main landing gear (21a) that is at least partially retractable into the lateral boom (14a).
